(19) Europäisches Patentamt
European Patent Office
Office européen des brevets

(11) Numéro de publication: **0 037 031**
**A1**

(12) **DEMANDE DE BREVET EUROPEEN**

(21) Numéro de dépôt: **81102093.2**

(51) Int. Cl.³: **H 01 M 6/14**

(22) Date de dépôt: **20.03.81**

(30) Priorité: **28.03.80 FR 8007077**
**30.12.80 FR 8027802**

(43) Date de publication de la demande:
**07.10.81 Bulletin 81/40**

(84) Etats contractants désignés:
**AT BE CH DE FR GB IT LI LU NL SE**

(71) Demandeur: **GIPELEC Société Anonyme dite :**
**125, rue du Président Wilson**
**F-92302 Levallois-Perret(FR)**

(72) Inventeur: **Gabano, Jean-Paul**
**11, rue des Dames des Roches**
**F-86000 Poitiers(FR)**

(74) Mandataire: **Weinmiller, Jürgen et al,**
**Zeppelinstrasse 63**
**D-8000 München 80(DE)**

(54) **Pile de grande énergie spécifique dans laquelle la matière active anodique est un métal alcalin.**

(57) Pile de grande énergie spécifique dans laquelle la matière active anodique est un métal alcalin, la matière active cathodique est un oxychlorure de soufre qui sert en même temps de solvant d'électrolyte, ce dernier contenant par ailleurs un sel dissous et un cosolvant. Selon l'invention le co-solvant est choisi parmi le chlorure de phosphoryle et le chlorure de benzoyle ; le sel dissous est le tétrachloraluminate de lithium ou l'hexachloroantimoniate de lithium.

FIG.4

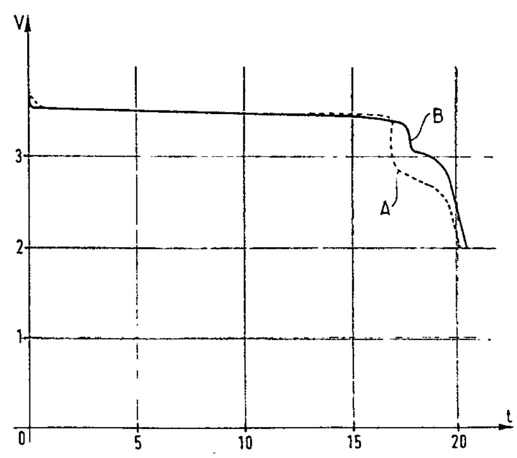


EP 0 037 031 A1

Pile de grande énergie spécifique dans laquelle la matière active anodique est un métal alcalin

L'invention concerne des piles de grande énergie spécifique où la matière active anodique est un métal alcalin, par exemple le lithium, et où la matière active cathodique est un solvant inorganique qui sert en même temps de solvant d'électrolyte et est constitué par un oxychlorure de soufre comme le chlorure de thionyle ou le chlorure de sulfuryle. Grâce à leur aptitude au stockage et à leurs hautes performances, ces piles trouvent de plus en plus d'applications et on a commencé en particulier à envisager leur application dans les stimulateurs cardiaques. Dans ce genre d'applications il est nécessaire d'être prévenu de l'approche de la fin de la décharge sans que la pile cesse de fonctionner valablement.

Un moyen a déjà été appliqué dans les générateurs électrochimiques classiques à électrolyte aqueux pour discerner l'état de charge du générateur, c'est d'avoir sur l'une au moins des électrodes une pluralité de matières actives se déchargeant successivement à des paliers de tension proches, mais discernables. C'est ainsi que dans le document FR-A 1.151.414 il était proposé de constituer l'électrode négative d'un accumulateur alcalin par du zinc, du cadmium et du fer dans un accumulateur pilote chargé et déchargé en même temps que la batterie dont il s'agit de déterminer l'état de charge.
L'inconvénient de telles solutions est que l'on ajoute une matière active étrangère dont la présence risque de perturber le fonctionnement du générateur.

On connait par ailleurs le document US-A 3.891.458 dans lequel il est préconisé d'ajouter à une pile, dont la matière active cathodique et le solvant d'électrolyte sont le chlorure de thionyle, un corps dissous choisi dans le groupe consistant essentiellement en le chlorure de phosphoryle, le sulfolane et l'anhydride sulfureux. Cependant il n'est cité dans les exemples que des concentrations de corps dissous trop faibles pour donner un second palier de décharge (pour le chlorure de phosphoryle, il est prévu 1,5 mole par litre, c'est-à-dire 12% en volume).

La présente invention permet d'écarter ces inconvénients.
Elle a pour objet une pile de grande énergie spécifique dans

laquelle la matière active anodique est un métal alcalin, et la matière active cathodique un oxychlorure de soufre qui sert en même temps de solvant d'électrolyte, ledit électrolyte contenant en outre un sel dissous et un co-solvant dont la tension de réduction par rapport audit métal alcalin est inférieure à la tension de réduction de l'anhydride sulfureux, caractérisée par le fait que les proportions (en volume) du co-solvant par rapport à l'ensemble solvant-co-solvant sont comprises entre 30 et 45%.

Dans ces conditions lorsque l'oxychlorure de soufre est consommé l'anhydride sulfureux provenant de sa réduction, qui est dissous dans le co-solvant, est réduit à son tour à une tension un peu inférieure à la tension de réduction de l'oxychlorure de sorte que, tout en continuant à débiter de façon valable, la pile présente un changement d'état détectable.

En effet, à titre d'exemple, la réaction de réduction du chlorure de thionyle est la suivante dans une pile où le métal alcalin est le lithium :

$$4\ SOCl_2 + 8\ Li \qquad 8\ LiCl + 2\ S + 2\ SO_2$$

L'anhydride sulfureux sera réduit suivant la réaction :

$$2\ SO_2 + 2\ Li \qquad Li_2S_2O_4$$

Comme co-solvant, il est possible d'utiliser le chlorure de phosphoryle ou le chlorure de benzoyle. Il a été constaté de façon assez surprenante que selon les proportions de co-solvant employées les paliers de décharge (le premier palier qui est le palier de décharge de l'oxychlorure de soufre, et le second palier qui est le palier de décharge de l'anhydride sulfureux) passaient respectivement par des maximums de longueur. Les proportions ont été par conséquent déterminées par ces maximums qui constituent des valeurs critiques.

L'invention sera mieux comprise à l'aide de l'exemple ci-après décrit en relation avec le dessin annexé dans lequel :

- la figure 1 représente une coupe partielle d'une pile selon l'invention.

- la figure 2 représente une courbe de décharge d'une pile conformément à la figure 1.

- la figure 3 représente la variation de la capacité des paliers de décharge des piles conformément à la figure 1.

- la figure 4 représente une courbe de décharge (A) d'une pile

selon l'invention contenant du chlorure de phosphoryle et une courbe de décharge (B) contenant du chlorure de benzoyle.

Sur la figure 1, une pile 1 selon l'invention a été représentée en coupe partielle. Elle comprend un godet 2 en une feuille complexe constituée par une feuille d'acier inoxydable et une feuille de nickel laminées ensemble, la feuille de nickel étant tournée vers l'intérieur. La fermeture du godet se compose d'un anneau 3 en acier inoxydable soudé en 4 au bord du godet et qui est électriquement isolé d'un cylindre tubulaire 5 en alliage de ferro-nickel par un joint étanche en verre 6. Ce cylindre 5 est fermé par un bouchon 7 en alliage de ferro-nickel qui lui est soudé en 8. Un disque de polytétrafluoréthylène 9 protège l'anneau 3 de l'attaque chimique des composants de la pile.

La pile est ainsi fermée hermétiquement. Elle est terminée extérieurement par un capot 10 en acier inoxydable qui coiffe le cylindre 5 et est en contact avec un anneau 11 qui s'enfile à force sur le cylindre 5. L'anneau 11 est isolé de l'anneau 3 par un anneau 12 en polytétrafluoréthylène.

Le godet est enveloppé dans une gaine 13 en chlorure de polyvinyle et une couche de résine thermodurcissable 14 protège les bords du capot 10.

La cathode 15, ou plus exactement le collecteur cathodique, est un cylindre poreux constitué par un mélange de 85% de noir d'acétylène et de 15% de polytétrafluoréthylène au contact du godet 2. L'anode 16 est constituée par une feuille de lithium enroulée sur le collecteur anodique 17, lui-même constitué par une feuille d'acier inoxydable enroulée. Un ressort 18 en acier inoxydable tend à repousser l'anode vers le collecteur cathodique 15 dont elle est séparée par un séparateur 19. Un disque 20 de polytétrafluoréthylène isole l'anode du fond du godet 2. Le ressort 18 est soudé au cylindre 5, de sorte que le capot 10 constitue la borne négative de la pile dont le godet 2 constitue la borne positive par son fond non protégé par la gaine 13.

Dans l'exemple qui est décrit les dimensions extérieures de la pile correspondent aux dimensions normalisées des piles R6 de la Commission Electrotechnique Internationale. Le collecteur cathodique une hauteur de 40 mm et une épaisseur de 4 mm. L'anode de lithium un poids de 0,492 g, ce qui correspond à une capacité de 1,9Ah ;

La pile contient 3,7cm3 d'un électrolyte constitué par un mélange de 60% de chlorure de thionyle et de 40% de chlorure de phosphoryle dans lequel était dissoute 0,5 mole de tétrachloroaluminate de lithium.

Cette pile déchargée sur une résistance de 1000 ohms à une température de 25°C a donné une décharge qui est représentée par la courbe de la figure 2.

Sur cette figure on a porté la capacité C déchargée mesurée en ampères-heures, en abscisse, et la tension V aux bornes de la pile mesurée en volts, en ordonnée.

On voit que jusqu'à une capacité d'environ 1,4 Ah, la pile se décharge sur un premier palier situé aux environs de 3,5 volts, puis la tension de la pile s'abaisse jusqu'à un second palier à environ 2,9 volts, ce qui correspond à la tension de réduction de l'anhydride sulfureux et non à la tension de réduction du chlorure de phosphoryle qui est d'environ 2,5 volts.

La tension de réduction du chlorure de phosphoryle donnerait directement un saut de tension d'environ 1 volt, ce qui serait trop important pour la plupart des appareils. Il est donc essentiel que le palier de réduction de l'anhydride sulfureux apparaisse.

Des décharges ont été faites sur des piles analogues, en faisant varier les proportions respectives de chlorure de thionyle et de chlorure de phosphoryle. Les résultats de ces essais ont été représentés sur la figure 3 sur laquelle l'échelle des abscisses représente en pourcentage les proportions p de chlorure de thionyle, en volume. Deux échelles des ordonnées ont été représentées, celle de gauche correspondant à la capacité $C_1$ en ampères-heures du premier palier de décharge de la figure 2, et celle de droite correspondant à la capacité $C_2$ en ampères-heures du second palier de la figure 2 pour chacune des proportions des solvant et co-solvant.

La courbe 1 correspond au premier palier et la courbe 2 au second palier. Comme on le voit, les capacités de chacun des paliers passent chacune par un maximum pour p égale à 68% et 57%. Ces deux maximums correspondent à des valeurs critiques des proportions relatives des solvant et co-solvant et pour avoir des piles utilisables selon l'invention, ces proportions doivent être prises entre les deux valeurs critiques.

De telles piles déchargées à 70°C, pour simuler un stockage prolongé, ont donné des résultats encore meilleurs que lors des décharges à la température ambiante.

Le tétrachloroaluminate de lithium de l'électrolyte peut être remplacé par de l'hexachloroantimoniate de lithium.

De même des résultats analogues ont été obtenus, au point de vue des proportions de solvant et co-solvant en remplaçant le chlorure de thionyle par du chlorure de sulfuryle.

On se réfère maintenant aux courbes de décharge de la figure 4.

Deux séries de piles selon l'invention ont été montées, la seule composante variable étant la composition de l'électrolyte.

La série A correspond au type décrit plus haut, l'électrolyte est composé de 60% de chlorure de thionyle, 36% de chlorure de phosphoryle et 4% de tétrachloroaluminate de lithium (tous les pourcentages sont donnés en volume). La concentration du soluté correspond à peu près à 0,5 mole/litre.

Dans la série B, l'électrolyte est composé de 58,7% de chlorure de thionyle, 33,3% de chlorure de benzoyle et 8% de tétrachloroaluminate de lithium (environ 1M).

Ces deux séries de piles ont été déchargées sur une résistance de 1000 ohms à la température ambiante.

Les courbes de décharge A et B sont représentées sur la figure 4 où les tensions V ont été portées en volts en ordonnée et le temps t en jours en abscisse. La courbe en pointillé A représente la moyenne de la première série et la courbe en trait plein B la moyenne de la seconde série.

Comme on le voit la courbe B présente un second palier en fin de décharge, à une tension légèrement supérieure à celle du second palier de la série A. Les rendements du premier palier (décharge de $SOCl_2$) sont 85,7% pour la série A et 90% pour la série B, tandis que les seconds paliers ont des rendements respectivement de 54,6% et 47% calculés sur la quantité de $SO_2$ formée lors de la décharge.

On voit qu'avec le chlorure de benzoyle le palier se produit à une tension légèrement supérieure à 3 volts, ce qui peut être un avantage dans certaines applications où la tension, tout en marquant un décrochement ne doit pas s'abaisser trop.

Enfin, l'addition de chlorure de benzoyle permet de dissoudre des concentrations de tétrachloroaluminate de lithium allant jusqu'à 1,5 mole/litre.

REVENDICATIONS

1/ Pile de grande énergie spécifique dans laquelle la matière active anodique (16) est un métal alcalin, et la matière active cathodique un oxychlorure de soufre qui sert en même temps de solvant d'électrolyte, ledit électrolyte contenant en outre un sel dissous et un co-solvant dont la tension de réduction par rapport audit métal alcalin est inférieure à la tension de réduction de l'anhydride sulfureux, caractérisée par le fait que les proportions (en volume) du co-solvant par rapport à l'ensemble solvant/co-solvant sont comprises entre 30 et 45%, de manière à obtenir dans les courbes de décharge (tension en fonction de la capacité déchargée) un second palier de décharge perceptible, au niveau de la tension de réduction de l'anhydride sulfureux.

2/ Pile selon la revendication 1, caractérisée par le fait que le métal alcalin est le lithium.

3/ Pile selon l'une des revendications 1 et 2, caractérisée par le fait que la proportion du co-solvant est de 40%.

4/ Pile selon l'une des revendications précédentes, caractérisée par le fait que ledit solvant est du chlorure de thionyle.

5/ Pile selon l'une des revendications 1 à 3, caractérisée par le fait que ledit solvant est du chlorure de sulfuryle.

6/ Pile selon l'une des revendications précédentes, caractérisée par le fait que ledit co-solvant est du chlorure de phosphoryle.

7/ Pile selon l'une des revendications 1 à 5, caractérisée par le fait que ledit co-solvant est du chlorure de benzoyle.

8/ Pile selon l'une des revendications précédentes, caractérisée par le fait que ledit sel dissous est choisi dans le groupe de tétrachloroaluminate de lithium et de l'hexachloroantimoniate de lithium ($SbCl_6Li$).

9/ Pile selon la revendication 7, caractérisée par le fait que le sel dissous est du tétrachloroaluminate de lithium à raison de 0,8 à 1,5 moles par litre.

FIG.1

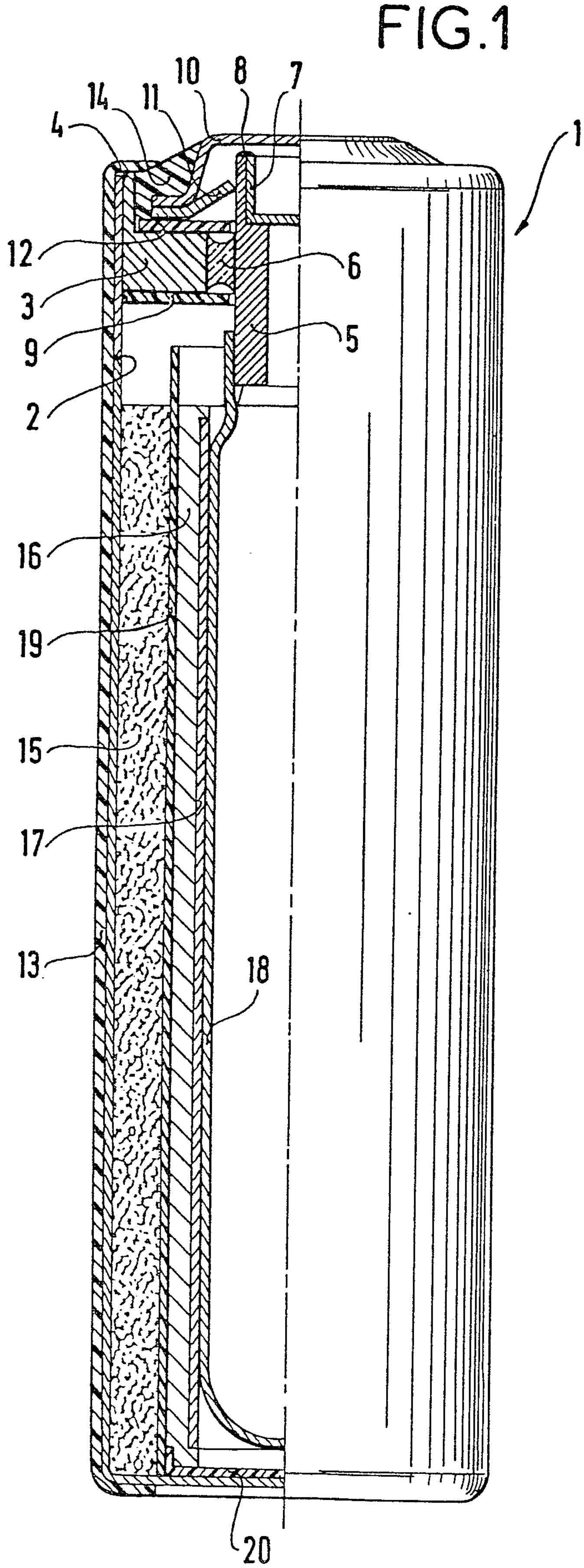

FIG. 2

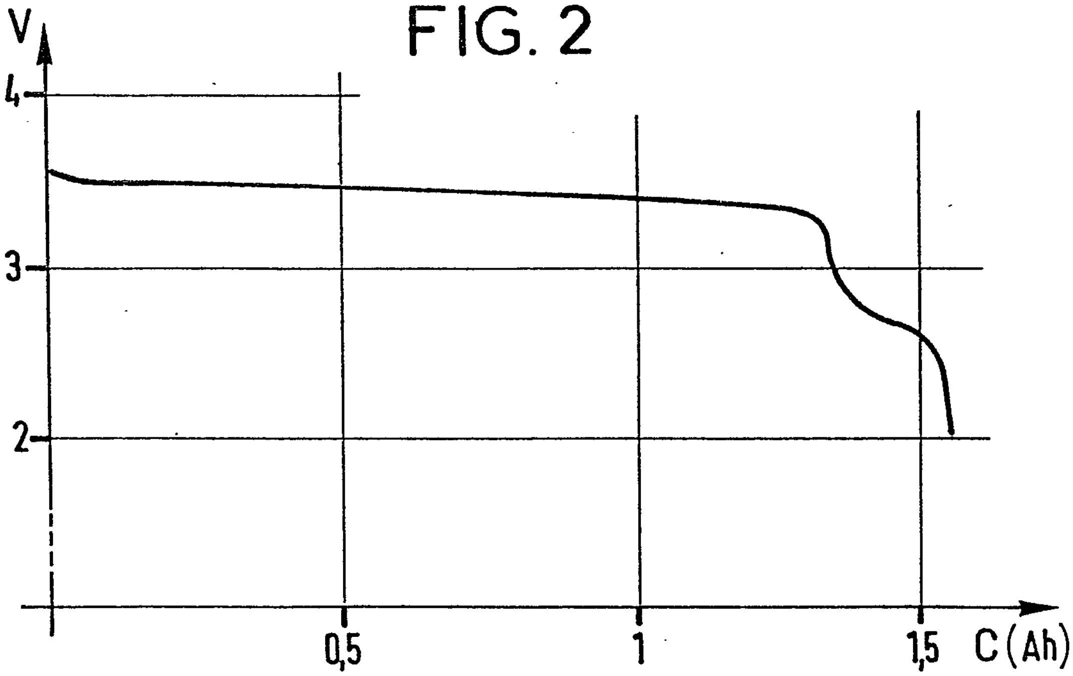


FIG. 3

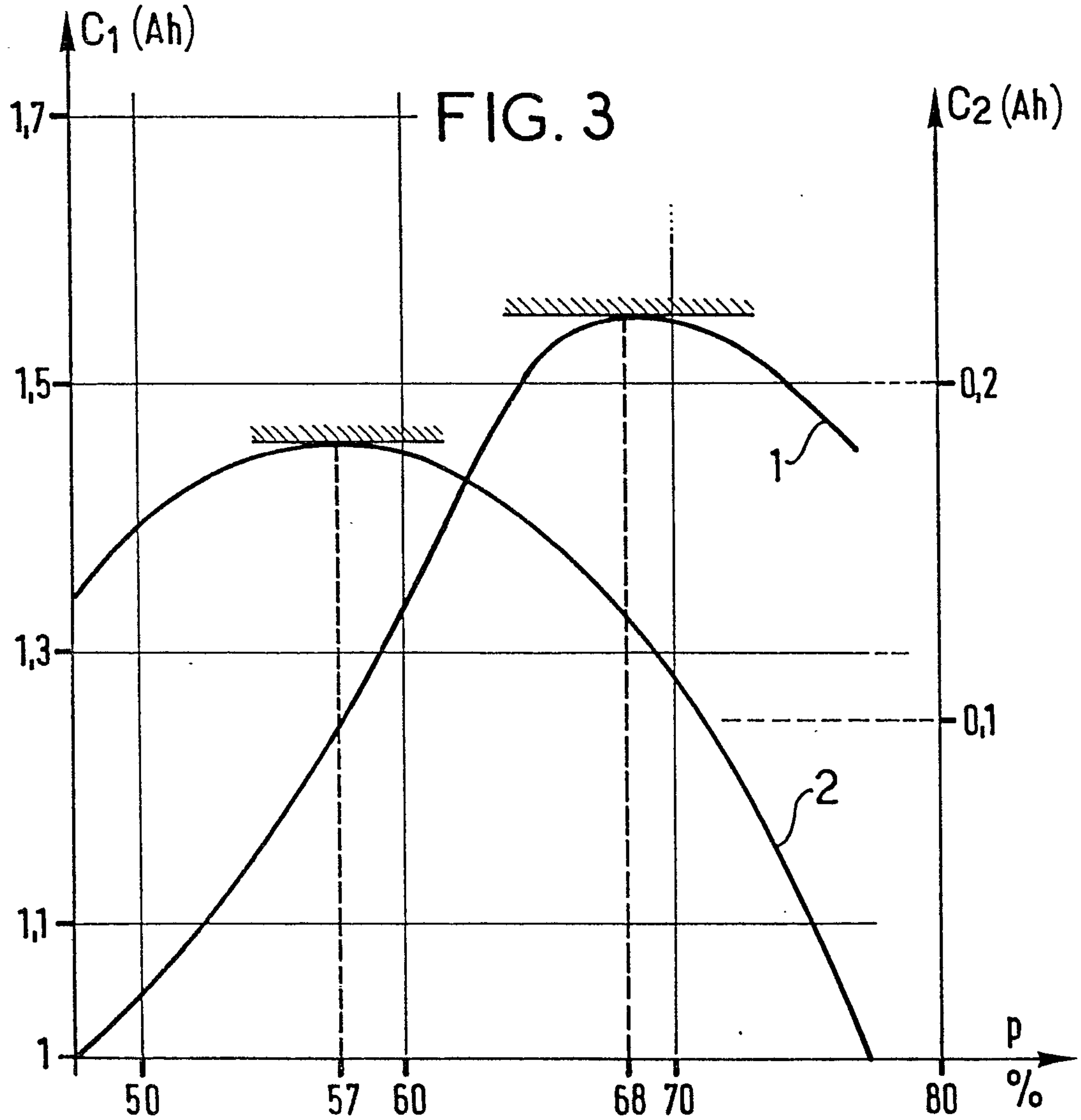

FIG.4

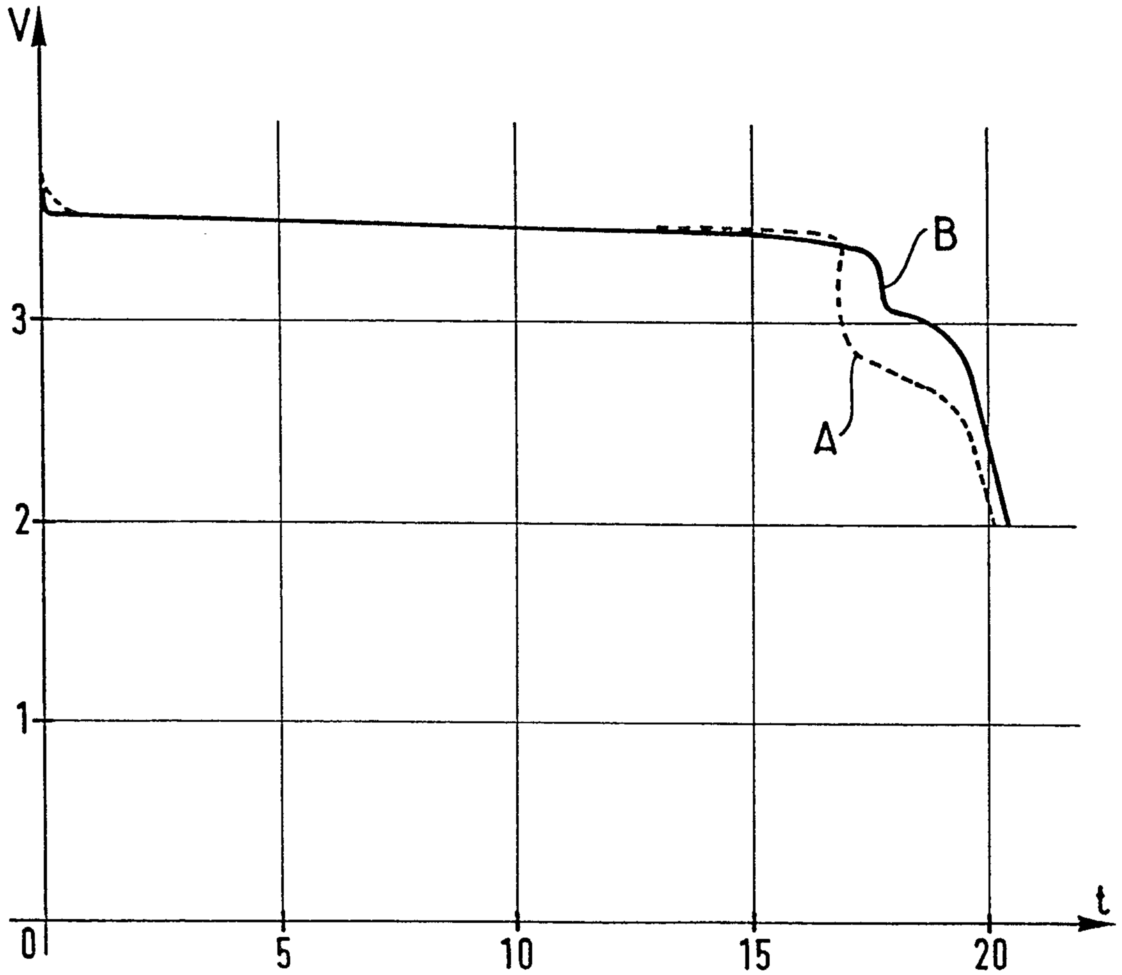

0037031

Office européen des brevets

# RAPPORT DE RECHERCHE EUROPEENNE

Numéro de la demande

EP 81 10 2093

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | US - A - 3 922 174 (A. HELLER)<br>* Résumé, colonne 2, lignes 36-68; colonne 3, lignes 30-69; colonne 4, lignes 1-44; colonne 6, exemples VI, IX *<br>-- | 1,2,4-6,8 | H 01 M 6/14 |
| | US - A - 3 923 543 (J.J. AUBORN)<br>* Résumé, colonne 3, lignes 35-68; colonne 4, colonne 5, lignes 1-22; colonne 9, exemples XV, XVI *<br>--- | 1,2,4-6,8 | |
| | US - A - 4 184 007 (L.F. URRY)<br>* Colonne 3, lignes 11-26 *<br>& FR - A - 2 444 345<br>& GB - A - 2 038 534<br>& DE - A - 2 939 667<br>-- | 1,7 | DOMAINES TECHNIQUES RECHERCHES (Int. Cl.³)<br>H 01 M 6/14<br>10/36<br>4/36 |
| D | US - A - 3 891 458 (M. EISENBERG)<br>* Résumé, colonne 1, lignes 35-55; colonne 2, exemple 4; revendication 1 *<br>-- | 1 | |
| | JOURNAL OF THE ELECTROCHEMICAL STY vol. 126, nr. 4, avril 1979<br>Princeton, US<br>C.R. SCHLAIKJER: "Discharge reaction mechanisms in Li/$SOCl_2$ cells", pages 513-522<br>* Page 513, résumé; page 514, colonne de droite; page 517, colonne de droite, dernière alinéa *<br>-- | 1 | CATEGORIE DES DOCUMENTS CITES<br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| X | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 30-06-1981 | DE VOS |

Office européen des brevets

# RAPPORT DE RECHERCHE EUROPEENNE

Numéro de la demande

EP 81 10 2093



| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| P | US - A - 4 200 684 (PER BRO)<br>* Colonne 2, lignes 38-63, revendication 10 *<br>-- | 1 | |
| A | FR - A - 2 266 957 (P.R. MALLORY)<br>& US - A - 4 025 700<br>& GB - A - 1 497 222<br>& DE - A - 2 514 795<br>-- | | |
| A | DE - A - 2 937 285 (HITACHI)<br>& US - A - 4 259 415<br>-- | | DOMAINES TECHNIQUES RECHERCHES (Int. Cl. 3) |
| A | US - A - 4 135 519 (WILSON GREATBATCH)<br>& FR - A - 2 409 045<br>& GB - A - 2 009 490<br>& DE - A - 2 850 211<br>---- | | |